# EUROPÄISCHE PATENTSCHRIFT

(11) **EP 1 029 661 B1**
(45) Veröffentlichungstag und Bekanntmachung des Hinweises auf die Patenterteilung: **03.11.2004**
(21) Anmeldenummer: 99811081.1
(22) Anmeldetag: 24.11.1999
(51) Int. Cl.: B32B 15/08, B32B 27/36, B65D 65/40

(54) **Verbundfolie und Verfahren zu ihrer Herstellung**
Composite film and process for its manufacture
Feuille composite et procédé pour sa fabrication

(30) Priorität: 17.02.1999 EP 99810141
(43) Veröffentlichungstag der Anmeldung: 23.08.2000
(73) Patentinhaber: Alcan Technology & Management AG, 8212 Neuhausen am Rheinfall (CH)
(72) Erfinder: Lohwasser, Wolfgang, 78262 Gailingen (DE); Gerber, Manfred, 78224 Singen (DE); Nägeli, Hans-Rudolf, 8212 Neuhausen (CH); Hummel, Otto, 78224 Singen (DE)

(56) Entgegenhaltungen:
- EP-A- 0 484 275
- US-A- 4 568 413
- US-A- 5 670 224
- US-A- 5 830 545
- DATABASE WPI Section Ch, Week 8920 Derwent Publications Ltd., London, GB; Class A89, AN 89-147742 XP002106448 & JP 01 090793 A (MATSUSHITA ELEC IND CO LTD), 7. April 1989 (1989-04-07)
- DATABASE WPI Section Ch, Week 8915 Derwent Publications Ltd., London, GB; Class A28, AN 89-111649 XP002106449 & JP 01 059625 A (MATSUSHITA ELEC IND CO LTD), 7. März 1989 (1989-03-07)
- DATABASE WPI Section Ch, Week 9006 Derwent Publications Ltd., London, GB; Class A85, AN 90-042124 XP002106450 & JP 01 320620 A (MATSUSHITA ELEC IND CO LTD), 26. Dezember 1989 (1989-12-26)

## Beschreibung

Die Erfindung betrifft eine Kunststoffverbundfolie und ein Verfahren zu ihrer Herstellung nach dem Oberbegriff der Ansprüche 1 und 5.

Kunststoffverbundfolien aus einer Substratfolie und einer mittels Extrusionsbeschichtung oder Kaschierung aufgebrachten Kunststoffschicht zeigen eine für viele Anwendungen nicht ausreichende Haftung der extrudierten Schicht auf der Substratfolie.

Es ist bekannt, dass zur Verbesserung der Haftung zwischen einer Substratfolie und einer durch Extrusionsbeschichten aufgebrachten Kunststoffschicht häufig haftungsfreudig modifizierte Co- und Terpolymere aus Ethylen oder Propylen eingesetzt werden.

Damit eine Kunststoffverbundfolie beispielsweise als siegelbare Folie für Verpackungsanwendungen verwendet werden kann, ist die Siegelnahtfestigkeit von entscheidender Bedeutung.

Der vorliegenden Erfindung liegt deshalb die Aufgabe zugrunde, eine Kunststoffverbundfolie der eingangs genannten Art zu schaffen, die eine im Vergleich zu Kunststoffverbundfolien nach dem Stand der Technik höhere Haftfestigkeit zwischen der durch Extrusionsbeschichten aufgebrachten Kunststoffschicht und der Substratfolie aufweist. Ein weiteres Ziel der Erfindung ist die Bereitstellung eines zur Herstellung einer derartigen Kunststoffverbundfolie geeigneten Verfahrens. Zur erfindungsgemässen Lösung der Aufgabe führt eine Kunstoffverbund folie und ein Verfahren zu ihrer Herstellung mit den Merkmalen der Ansprüche 1 und 5. Bevorzugte Metalle sind Chrom und Aluminium, wobei Chrom besonders bevorzugt ist. Eine bevorzugte Legierung ist V2A-Stahl.

Überraschenderweise hat sich gezeigt, dass bereits eine monoatomare Metallschicht für eine gute Haftung ausreichend ist. Monoatomar heisst dabei nicht, dass die Atome in einer monoatomaren Lage angeordnet sein müssen. Vielmehr bilden sich wie bei allen Kondensationsprozessen Cluster von Atomen. Unter einer monoatomaren Schicht wird hier eine Flächenbelegung verstanden, die zu einer annähernd monoatomaren Lage führen würde, wenn man die Atome gleichmässig über die Substratfläche verteilen würde.

Obschon auch dickere Metallschichten Verwendung finden könnten, wird aus Kostengründen und zur Gewährleistung einer hohen optischen Transparenz eine einer monoatomaren Belegung entsprechende Schichtdicke von 0.1 bis 0.5nm eingestellt. Ebenfalls überraschend ergibt sich selbst bei einer Schichtdicke von 0.2nm dieselbe Haftfestigkeit, wie sie bei dickeren Schichten einer Dicke von 1 nm und grösser beobachtet wird. Die 0.2nm dicken Schichten beeinträchtigen die optische Transparenz der fertigen Verbundfolie nahezu nicht, sind also für das menschliche Auge unsichtbar.

Bei einer erfindungsgemässen, beispielsweise für Verpackungszwecke vorgesehene Kunststoffverbundfolie kann die Kunststofffolie zur Erzielung einer guten Durchtrittssperrwirkung für Wasserdampf und Gase mit einer keramischen Schicht aus SiOₓ, wobei x eine Zahl zwischen 0.9 und 2, vorzugsweise einer Zahl zwischen 1.5 und 1.8 ist, beschichtet sein. Diese zwischen der Kunststoffolie und der Metallschicht angeordnete keramische Schicht beeinflusst die durch die Metallschicht erhöhte Haftfestigkeit in keiner Weise.

Bei einem bevorzugten Aufbau der Kunststoffverbundfolie besteht die durch Extrusionsbeschichten aufgebrachte Kunststoffschicht aus wenigstens einem der Kunststoffe Polyethylen (PE) oder haftungsfreudig modifizierten Co- und Terpolymeren mit Ethylen (E) oder Propylen (P) als einer der Monomerkomponenten, insbesondere aus E.AA, E.MAA, E.VA, E.MA, E.EA, E.nBA, E.CO, E.VA.CO, E.nBA.CO, E.AE.AA, P.MAH, lonomere und dergleichen, wobei bevorzugt E.AA eingesetzt wird. PE oder die genannten Co- und Terpolymere können alleine oder als durch Coextrusion oder durch Extrusionskaschieren aufgebrachte Verbindungsschicht zu anderen bahnförmigen Materialien eingesetzt werden. Auch können durch PE oder die genannten Co- und Terpolymere zwei oder mehrere mit einer erfindungsgemässen Metallschicht beschichtete Filme bzw. Folien verbunden werden.

Die genannten Monomerkomponenten bedeuten:
- AA: Acrylsäure
- AE: Acrylester (MA, EA, BA)
- nBA: n-Butylacrylat
- CO: Kohlenmonoxid
- EA: Ethylacrylat
- MA: Methylacrylat
- MAA: Methylacrylsäure
- MAH: Maleinsäureanhydrid
- VA: Vinylacetat.

Die Kunststofffolie der erfindungsgemässen Kunststoffverbundfolie besteht beispielsweise aus einem Polyester, insbesondere aus Polyethylenterephtalat (PET), aus orientiertem Polyamid (oPA), orientiertem Polypropylen (oPP) oder dergleichen.

Selbstverständlich kann die erfindungsgemässe Kunststoffverbundfolie beidseitig weitere Schichten aus Kunststoff oder beispielsweise Lackschichten, die auch bedruckt sein können, aufweisen.

Die dünne Metallschicht wird vorzugsweise durch Aufdampfen oder Sputtern abgeschieden, wobei Sputtern bevorzugt wird.

Die Metallschicht wird in einer einer monoatomaren Belegung entsprechenden Menge mit einer Schichtdicke von etwa 0.1 bis 0.5nm abgeschieden.

Bei einer zweckmässigen Ausführung des erfindungsgemässen Verfahrens wird die Metallschicht in Linie mit einem anderen Vakuumdünnschichtverfahren zur Erzielung einer anderen Eigenschaft, insbesondere mit einem Vakuumdünnschichtverfahren zur Abscheidung eines keramischen Materials auf der Kunststofffolie abgeschieden. Da eine sehr dünne Metallschicht für eine gute Haftung bereits ausreicht ist es möglich, diese Schicht mit einer Sputterkathode bei sehr hohen Bandgeschwindigkeiten, die mit dem Aufdampfprozess kompatibel sind, zu sputtern.

Durch die geringe erforderliche Schichtdicke der Metallschicht ist es möglich, dass man eine Beschichtungsquelle ohne Beschichtungswalze zwischen zwei Umlenkwalzen anordnet (Free-Span-Betrieb). Die Beschichtungsquellen, z.B. zwei Sputterkathoden, können auch so angeordnet werden, dass beide Seiten der Kunststoffolie mit einer dünnen Metallschicht als Haftvermittler versehen werden können.

Es ist erfindungsgemäss auch möglich, das Extrusionsbeschichten ebenfalls in Linie im Vakuum auszuführen. Dazu muss allerdings die zu extrudierende Schmelze vor der Extrusion entgast werden, was zweckmässigerweise im Extruder mittels marktgängigen Doppelschneckenextrudem mit Vakuum-Entgasung erfolgt.

Weitere Vorteile, Merkmale und Einzelheiten der Erfindung ergeben sich aus den nachfolgenden Beispielen, der Beschreibung sowie anhand der Zeichnung; diese zeigt schematisch in
- Fig. 1: den Aufbau einer erfindungsgemässen Kunststoffverbundfolie;
- Fig. 2: den Aufbau durch ein zur Herstellung von Tuben geeignetes Laminat;
- Fig. 3: eine Vorrichtung zur Durchführung des erfindungsgemässen Verfahrens.

### Beispiel 1

Eine 12µm dicke Polyesterfolie aus Polyethylenterephtalat (PET) wird in Linie zuerst mittels eines Sauerstoffplasmas vorbehandelt, anschliessend mit 80nm SiO_{1.8} mittels Elektronenstrahl-Bedampfen beschichtet. Danach erfolgt ein Beschichten mit Chrom. Die Bandgeschwindigkeit beträgt 200 m/min, die Beschichtungsbreite liegt bei 690 mm. Das Beschichten mit Chrom erfolgt auf derselben Beschichtungswalze, auf der auch das Beschichten mit SiO_{1.8} durchgeführt wird, mittels einer DC-Magnetronsputterkathode (PK750 von Leybold), auf der eine Chrom-Platte als Target aufgelötet ist. Die Abscheidung erfolgt in einer Argon-Atmosphäre bei 3.10 ⁻³ mbar. Die elektrische Leistung für die Sputterkathode beträgt 10kW. Unter diesen Bedingungen ergibt sich eine Schichtdicke von etwa 1.5 Angström (0.15nm).

Die so im Vakuum beschichtete Polyesterfolie wird anschliessend in einem separaten Arbeitsschritt in einer Coextrusionsbeschichtungsanlage mit 10µm E.AA/15µm LDPE (low density polyethylene) beschichtet. Die Schichtdicke beträgt 25µm. Die Schichten lassen sich nicht trennen.

Zur Überprüfung der Eignung der Verbundfolie für Verpackungsanwendungen wurden zwei derart beschichtete Folien mit der mit PE beschichteten Seite unter Einwirkung von Druck und Wärme gegeneinander gesiegelt. Die gemessene Siegelnahtfestigkeit nach DIN 53539 beträgt 16.3N/15mm.

### Beispiel 2

Die Herstellung einer Verbundfolie erfolgt wie in Beispiel 1, wobei das Extrusionsbeschichten nur mit PE ohne E.AA durchgeführt wird. Die gemessene Siegelnahtfestigkeit beträgt 11.3N/15mm.

### Beispiel 3 (Vergleichsbeispiel )

Die Herstellung einer Verbundfolie erfolgt wie in Beispiel 1, jedoch ohne Beschichten mit Chrom. Das anschliessende Coextrusionsbeschichten mit PE oder E.AA ergibt keine ausreichende Haftung.

### Beispiel 4

Eine 15µm dicke Folie aus orientiertem Polyamid (oPA) wird entsprechend Beispiel 1 beschichtet. Das anschliessende Extrusionsbeschichten mit PE oder E.AA ergibt ebenfalls hervorragende Haftungswerte von >10N/15mm.

### Beispiel 5

Eine 12µm dicke PET-Folie wird gemäss Beispiel 1 beschichtet. Zusätzlich befindet sich jedoch in der Vakuum-Bedampfungsanlage noch eine weitere Sputterkathode, die im "Free-Span" auch die Rückseite der Folie mit Chrom beschichtet. Dadurch ergibt sich eine Folie, die von beiden Seiten durch Extrusionsbeschichten beschichtbar ist. Die Folie wird von beiden Seiten mit je einer 100µm dicken Schicht aus E.AA/LDPE coextrusionsbeschichtet oder extrusionskaschiert. Dadurch erhält man ein aluminiumfreies Laminat mit hervorragender Sperrwirkung gegen Gase und Aromastoffe für Zahnpastatuben.

### Beispiel 6

Ein weiteres sogenanntes Tubenlaminat weist entsprechend Beispiel 5 eine auf beiden Seiten mit Chrom beschichtete 12µm dicke PET-Folie auf. Die spätere Tubenaussenseite besteht aus einem 110µm dicken PE-Film, der über eine 50µm dicke Schicht aus einem E.AA-Copolymer beispielsweise durch Extrusionskaschieren mit der PET-Folie verbunden ist. Die Tubeninnenseite besteht aus einem 60µm dicken PE-Film, der z.B. durch Coextrusion mit einer 40µm dicken Schicht aus einem E.AA-Copolymer mit der Rückseite der mit Chrom beschichteten PET-Folie verbunden ist.

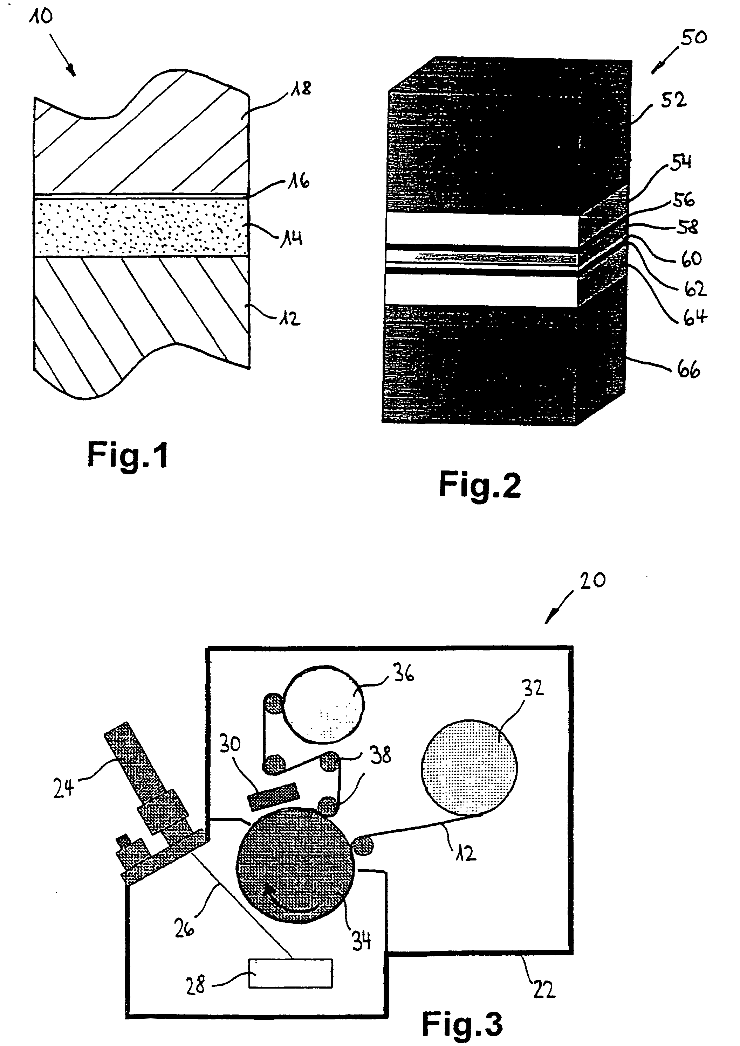

Eine in Fig. 1 gezeigte Kunststoffverbundfolie 10 umfasst eine beispielsweise 12µm dicke Kunststofffolie 12 aus PET, beschichtet mit einer keramischen Schicht aus SiOₓ, wobei x beispielsweise 1.8 ist. Auf der keramischen Schicht 14 ist eine beispielsweise 0.2nm dicke, durch Sputtem aufgetragene Metallschicht 16 aus Chrom angeordnet. Die Metallschicht 16 dient als Haftvermittler zu einer durch Extrusionsbeschichten aufgetragenen Kunststoffschicht 18 aus beispielsweise PE oder E.AA.

Fig. 2 zeigt den Aufbau des Tubenlaminates gemäss Beispiel 6. Ein Tubenlaminat 50 zeigt von der Tubenaussenseite zur Tubeninnenseite hin den folgenden Aufbau:
- 52: PE-Film, 110µm
- 54: Extrusionskaschierschicht aus einem E.AA-Copolymer, 50µm
- 56: Chromschicht
- 58: PET-Folie, 12µm
- 60: Beschichtung aus SiO_{1.8}
- 62: Chromschicht
- 64: E.AA-Schicht, 40µm
- 66: PE-Schicht, 60µm

Die E.AA-Schicht 64 ist zusammen mit der PE-Schicht 66 durch Coextrusion auf der Chromschicht 60 aufgetragen.

Das Tubenlaminat 50 gemäss Fig. 2 zeigt ein Basislaminat, welches insbesondere auf der Tubenaussenseite, d.h. auf dem PE-Film 52, weitere Schichten aufweisen kann.

Eine in Fig. 3 dargestellte Beschichtungsanlage 20 weist eine Vakuumkammer 22 auf. Ein von einer Elektronenstrahlkanone 24 emittierter Elektronenstrahl 26 wird auf das in einem Tiegel oder in einer Platte vorhandene Material 28 gelenkt, wobei sich das Material 28 zur Erzeugung der keramischen Schicht 14 durch die Energie des auftreffenden Elektronenstrahls 26 erhitzt und verdampft.

Innerhalb der Vakuumkammer ist auch ein zur Bildung der dünnen Metallschicht erforderliches Metall bzw. die Legierung in Form einer Metallplatte auf einer Sputterkathode 30 aufgelötet. In der Vakuumkammer 22 wird eine Argon-Atmosphäre bei einem Druck von 3.10⁻³mbar aufrechterhalten. Die elektrische Leistung für die Sputterkathode wird der erfindungsgemässen Schichtdicke entsprechend eingestellt.

Innerhalb der Vakuumkammer wird die Kunststofffolie 12 von einer ersten Rolle 32 abgewickelt und über eine Walze 34 gezogen. Die auf der Walze 34 als Substratträger aufliegende Kunststofffolie 12 bildet im Arbeitsbereich eine Substratfläche, auf welcher das vom Elektronenstrahl 26 der Elektronenstrahlkanone 24 verdampfte Material 28 in Form der keramischen Schicht 14 abgeschieden wird. Auf die auf der Kunststofffolie 12 niedergeschlagenen keramische Schicht 14 wird die dünne Metallschicht 16 durch Sputtern aufgetragen. Nach erfolgtem Beschichten mit der keramischen Schicht 14 und der Metallschicht 16 wird die derart beschichtete Kunststofffolie 12 auf eine weitere Rolle 36 aufgewickelt. Zur Führung der Kunststofffolie 12 sind Umlenkrollen 38 vorgesehen. Die Bandgeschwindigkeit der Kunststofffolie 12 in der Vakuumkammer 22 liegt beispielsweise bei etwa 400m/min. Die auf die Rolle 36 aufgewikkelte, mit der keramischen Schicht 14 und der Metallschicht 16 beschichtete Kunststofffolie 12 wird anschliessend - in der Zeichnung aus Gründen der besseren Übersicht nicht dargestellt - zum Auftragen der Extrusionsschicht 18 einer Extrusionsbeschichtungsanlage zugeführt.

## Patentansprüche

1. Kunststoffverbundfolie mit einer gegebenenfalls auf wenigstens einer Seite mit einem mittels eines Vakkuumdünnschichtverfahrens abgeschiedenen keramischen Material (14) beschichteten Kunststofffolie (12) und einer auf die Kunststofffolie bzw. auf die gegebenenfalls vorhandene keramische Schicht durch Extrusionsbeschichten aufgebrachten Kunststoffschicht (18), wobei die keramische Schicht (14) zwischen der Kunststofffolie (12) und der durch Extrusionsbeschichten aufgebrachten Kunststoffschicht (18) angeordnet ist,
**dadurch gekennzeichnet, dass**
zwischen der Kunststofffolie (12) bzw. der gegebenenfalls vorhandenen keramischen Schicht (14) und der durch Extrusionsbeschichten aufgebrachten Kunststoffschicht (18) eine Metallschicht (16) aus Chrom, Aluminium, Nickel, Titan, Eisen, Molybdän oder einer aus wenigstens zwei dieser Metalle zusammengesetzten Legierung als Haftvermittler in einer einer monoatomaren Belegung entsprechenden Menge mit einer Schichtdicke von 0.1 bis 0.5 nm angeordnet ist.

2. Kunststoffverbundfolie nach Anspruch 1, **dadurch gekennzeichnet, dass** die Kunststofffolie (12) mit einer keramischen Schicht (14) aus SiOₓ, wobei x eine Zahl zwischen 0.9 und 2, vorzugsweise eine Zahl zwischen 1.5 und 1.8 ist, beschichtet ist.

3. Kunststoffverbundfolie nach Anspruch 1 oder 2, **dadurch gekennzeichnet, dass** die durch Extrusionsbeschichten aufgebrachte Kunststoffschicht (18) aus wenigstens einem der Kunststoffe PE oder Co/Terpolymere mit Ethylen (E) oder Propylen (P) als einer der Monomerkomponenten, insbesondere aus E.AA, E.MAA, E.VA, E.MA, E.EA, E.nBA, E.CO, E.VA.CO, E.nBA.CO, E.AE.AA oder P.MAH besteht, wobei AA Acrylsäure, AE Acrylester (MA, EA, BA), nBA n-Butylacrylat, CO Kohlenmonoxid, EA Ethylacrylat, MA Methylacrylat, MAA Methylacrylsäure, MAH Maleinsäureanhydrid und VA Vinylacetat bedeuten.

4. Kunststoffverbundfolie nach einem der Ansprüche 1 bis 3, **dadurch gekennzeichnet, dass** die Kunststofffolie (12) aus einem Polyester, insbesondere aus Polyethylenterephtalat (PET), aus orientiertem Polyamid (oPA) oder aus orientiertem Polypropylen (oPP), besteht.

5. Verfahren zur Herstellung einer Kunststoffverbundfolie (10) mit einer gegebenenfalls auf wenigstens einer Seite mit einem mittels eines Vakuumdünnschichtverfahrens abgeschiedenen keramischen Material (14) beschichteten Kunststofffolie (12) und einer auf die Kunststofffolie bzw. auf die gegebenenfalls vorhandene keramische Schicht durch Extrusionsbeschichten aufgebrachten Kunststoffschicht (18), wobei die keramische Schicht (14) zwischen der Kunststofffolie (12) und der durch Extrusionsbeschichten aufgebrachten Kunststoffschicht (18) angeordnet ist,
**dadurch gekennzeichnet, dass**
vor dem Extrusionsbeschichten eine Metallschicht (16) aus Chrom, Aluminium, Nickel, Titan, Eisen, Molybdän oder einer aus wenigstens zwei dieser Metalle zusammengesetzten Legierung mittels eines Vakuumdünnschichtverfahrens als Haftvermittler in einer einer monoatomaren Belegung entsprechenden Menge mit einer Schichtdicke von 0.1 bis 0.5 nm auf der Kunststofffolie (12) bzw. auf der gegebenenfalls vorhandenen keramischen Schicht (14) abgeschieden wird.

6. Verfahren nach Anspruch 5, **dadurch gekennzeichnet, dass** die Metallschicht (16) durch Aufdampfen oder Sputtern abgeschieden wird.

7. Verfahren nach Anspruch 5 oder 6, **dadurch gekennzeichnet, dass** die Metallschicht (16) in Linie mit einem anderen Vakuumdünnschichtverfahren zur Erzielung einer anderen Eigenschaft, insbesondere mit einem Vakuumdünnschichtverfahren zur Abscheidung eines keramischen Materials (14) auf der Kunststofffolie (12), abgeschieden wird.

8. Verfahren nach einem der Ansprüche 5 bis 7, **dadurch gekennzeichnet, dass** das Extrusionsbeschichten in Linie mit der mittels eines Vakuumdünnschichtverfahrens abgeschiedenen Metallschicht (16) im Vakuum durchgeführt wird.

## Claims

1. Plastic composite film comprising a plastic film (12) coated on at least one side with a ceramic material (14) deposited by means of thin-film vacuum deposition and a plastic layer (18) applied by extrusion coating to the plastic film or to the ceramic layer possibly present, the ceramic layer (14) being arranged between the plastic film (12) and the plastic layer (18) applied by extrusion coating, **characterised in that** a metal layer (16) of chromium, aluminium, nickel, titanium, iron, molybdenum or an alloy composed of at least two of these metals is arranged between the plastic film (12) or the ceramic layer (14) possibly present and the plastic layer (18) applied by extrusion coating as an adhesion promoter in a quantity corresponding to monoatomic coverage with a layer thickness of 0.1 to 0.5 nm.

2. Plastic composite film according to claim 1, **characterised in that** the plastic film (12) is coated with a ceramic layer (14) of SiOₓ, where x is a number between 0.9 and 2, preferably a number between 1.5 and 1.8.

3. Plastic composite film according to claim 1 or claim 2, **characterised in that** the plastic layer (18) applied by extrusion coating consists of at least one of the plastics PE or copolymers/terpolymers with ethylene (E) or propylene (P) as one of the monomer components, in particular E.AA, E.MAA, E.VA, E.MA, E.EA, E.nBA, E.CO, E.VA.CO, E.nBA.CO, E.AE.AA or P.MAH, where AA is acrylic acid, AE is acrylate (MA, EA, BA), nBA is n-butyl acrylate, CO is carbon monoxide, EA is ethyl acrylate, MA is methyl acrylate, MAA is methacrylic acid, MAH is maleic anhydride and VA is vinyl acetate.

4. Plastic composite film according to one of claims 1 to 3, **characterised in that** the plastic film (12) consists of a polyester, in particular polyethylene terephthalate (PET), oriented polyamide (oPA) or oriented polypropylene (oPP).

5. Process for the production of a plastic composite film (10) comprising a plastic film (12) possibly coated on at least one side with a ceramic material (14) deposited by means of thin-film vacuum deposition and a plastic layer (18) applied by extrusion coating to the plastic film or to the ceramic layer possibly present, the ceramic layer (14) being arranged between the plastic film (12) and the plastic layer (18) applied by extrusion coating, **characterised in that**, before the extrusion coating, a metal layer (16) of chromium, aluminium, nickel, titanium, iron, molybdenum or an alloy composed of at least two of these metals is deposited on the plastic film (12) or on the ceramic layer (14) possibly present as an adhesion promoter in a quantity corresponding to monoatomic coverage with a layer thickness of 0.1 to 0.5 nm.

6. Process according to claim 5, **characterised in that** the metal layer (16) is deposited by vapour deposition or sputtering.

7. Process according to claim 5 or claim 6, **characterised in that** the metal layer (16) is deposited in line with another thin-film vacuum deposition process in order to achieve another property, in particular a thin-film vacuum deposition process for depositing a ceramic material (14) on the plastic film (12).

8. Process according to one of claims 5 to 7, **characterised in that** the extrusion coating is carried out in vacuo in line with the metal layer (16) deposited by means of thin-film vacuum deposition.

## Revendications

1. Feuille composite de matière plastique avec une feuille de matière plastique (12) revêtue éventuellement sur au moins un côté d'un matériau céramique (14) déposé au moyen d'un procédé de revêtement en couche mince sous vide et avec une couche de matière plastique appliquée sur la feuille de matière plastique respectivement sur la couche céramique éventuellement présente par revêtement par extrusion,
la couche céramique (14) étant disposée entre la feuille de matière plastique (12) et la couche de matière plastique (18) appliquée par revêtement par extrusion,
**caractérisée en ce que**,
il est disposé entre la feuille de matière plastique (12), respectivement la couche céramique (14) éventuellement présente et la couche de matière plastique (18) appliquée par revêtement par extrusion une couche de métal (16) constituée de chrome, d'aluminium, de nickel, de titane, de fer, de molybdène ou d'un alliage constitué d'au moins deux de ces métaux comme agent d'adhérence dans une quantité correspondant à une disposition monoatomique avec une épaisseur de couche de 0,1 à 0,5 nm.

2. Feuille composite de matière plastique selon la revendication 1, **caractérisée en ce que** la feuille de matière plastique (12) est revêtue d'une couche céramique (14) constituée de SiOₓ, x étant un nombre compris entre 0,9 et 2, de préférence un nombre compris entre 1,5 et 1,8.

3. Feuille composite de matière plastique selon la revendication 1 ou 2, **caractérisée en ce que** la couche de matière plastique (18) appliquée par revêtement par extrusion est constituée d'au moins une des matières plastiques de PE ou de co/terpolymères avec de l'éthylène (E) ou du propylène (P) comme un des constituants monomères, en particulier de E.AA, E.MAA, E.VA, E.MA, E.EA, E.nBA, E.CO, E.VA.CO, E.nBA.CO, E.AE.AA ou P.MAH, AA étant l'acide acrylique, AE un ester acrylique (MA, EA, BA), nBA l'acrylate de n-butyle, CO le monoxyde de carbone, EA l'acrylate d'éthyle, MA l'acrylate de méthyle, MAA l'acide méthacrylique, MAH l'anhydride d'acide maléique et VA l'acétate de vinyle.

4. Feuille composite de matière plastique selon l'une quelconque des revendications 1 à 3, **caractérisée en ce que** la feuille de matière plastique (12) est constituée d'un polyester, en particulier de poly(éthylène téréphtalate) (PET), de polyamide orienté (oPA) ou de polypropylène orienté (oPP).

5. Procédé pour la préparation d'une feuille composite de matière plastique (10) avec une feuille de matière plastique (12) éventuellement revêtue sur au moins un côté d'un matériau céramique (14) déposé à l'aide d'un procédé de revêtement en couche mince sous vide et d'une feuille de matière plastique (18) appliquée sur la feuille de matière plastique respectivement sur la couche céramique éventuellement présente par revêtement par extrusion, la couche céramique (14) étant disposée entre la feuille de matière plastique (12) et la couche de matière plastique (18) appliquée par revêtement par extrusion,
**caractérisé en ce que**,
avant le revêtement par extrusion une couche métallique (16) constituée de chrome, d'aluminium, de nickel, de titane, de fer, de molybdène ou d'un alliage constitué d'au moins deux de ces métaux, est déposée à l'aide d'un procédé en couche mince sous vide comme agent d'adhérence dans une quantité correspondant à un revêtement monoatomique avec une épaisseur de couche de 0,1 à 0,5 nm sur la feuille de matière plastique (12) respectivement sur la couche céramique (14) éventuellement présente.

6. Procédé selon la revendication 5, **caractérisé en ce que** la couche de métal (16) est déposée par vaporisation ou pulvérisation cathodique.

7. Procédé selon la revendication 5 ou 6, **caractérisé en ce que** la couche de métal (16) est déposée en ligne avec un autre procédé de revêtement en couche mince sous vide pour atteindre une autre caractéristique, en particulier avec un procédé de revêtement en couche mince sous vide destiné au dépôt d'un matériau céramique (14) sur la feuille de matière plastique (12).

8. Procédé selon l'une quelconque des revendications 5 à 7, **caractérisé en ce que** le revêtement par extrusion est réalisé sous vide en ligne avec la couche de métal (16) déposée au moyen d'un procédé de revêtement en couche mince sous vide.
